# EUROPEAN PATENT APPLICATION

(11) **EP 4 052 678 A1**
(43) Date of publication of application: **07.09.2022**
(21) Application number: 19950878.9
(22) Date of filing: 30.10.2019
(51) Int. Cl.: A61C 13/00, A61C 13/12, A61C 8/00

(54) **HYBRID METHOD FOR PRODUCING DENTAL CONNECTIONS BY MEANS OF SINTERING AND MILLING**

(71) Applicant: Promedent CAD-CAM, S.L.U., 28031 Madrid (ES)
(72) Inventor: PEÑALVER OLVERA, Pedro, 28031 MADRID (ES)
(74) Representative: Evens, Paul Jonathan
(86) International application number: PCT/ES2019/070738
(87) International publication number: WO 2021/084141

(57) **Abstract**

The invention relates to a hybrid method for producing dental connections by means of sintering and milling, which comprises providing a plate (1) of known dimensions; using a sintering machine (3) having a sintering disc (2); attaching the plate (1) to the sintering disc (2) of the sintering machine (3) by means of fastening means; sintering support columns, dental connections (5) and at least one centring lug (4); providing a milling machine having an attachment support (6); movably providing the plate (1) on the attachment support (6) having attachment means (7,8,9); providing a centring shaft (10) coupled to the milling machine, which has a head (11) with sloped surfaces; positioning the plate (1) in a horizontal plane (X, Y) by moving the centring shaft (10) such that the centring shaft (10) fits closely on the centring lug (4); attaching the plate (1) by means of screws (9) of the attachment means (7,8,9), once positioned in the milling machine; and milling the dental connections (5), a height reference in the vertical component (Z) being known.

## Description

### Technical field

The present invention relates to producing dental connections, and more specifically to a method combining sintering and milling to obtain dental connections with great precision and tolerance.

### State of the art

Methods for producing dental connections by means of sintering are widely known nowadays. This production technique by means of sintering consists of additive printing, using a metallic or ceramic powder to achieve a final piece with great strength and resistance. Moreover, costs related to the amount of material used are reduced compared to production methods with conventional milling machines, which start from a block to mill the dental connections. Certain dental connections, however, require greater precision, such as implant connections. Consequently, the tolerance and precision achieved are not those required in practice.

In these cases in which greater precision and tolerance must be achieved for certain dental pieces, after sintering, the dental connections obtained are subjected to a subsequent milling process. In this way, there are production methods that, once the dental connections have been obtained by sintering, transfer said dental connections to a milling machine for the final machining of the dental pieces that require it. Nevertheless, in the transfer of the sintered connections to the milling machine, the spatial references of the dental connections with respect to the machine are lost.

Therefore, the use of centring devices, such as touch probes, cameras and markers for position triangulation or laser measurement devices, is necessary. The use of these centring devices increases manufacturing costs and production times, in addition to requiring complex software for the milling process which makes the method for producing dental connections even more expensive.

In view of the described disadvantages presented by currently existing solutions, a solution is needed that allows sintering to be combined with milling in one same method, and at the same time does not require centring systems and software for highly complex milling.

### Object of the invention

In order to fulfil this objective and solve the technical problems discussed so far, in addition to providing additional advantages that can be derived later, the present invention provides a hybrid method for producing dental connections by means of sintering and milling which comprises the steps of providing a plate of known dimensions; using a sintering machine having a sintering disc; attaching the plate to the sintering disc of the sintering machine by means of fastening means; sintering support columns, dental connections and at least one centring lug; providing a milling machine having an attachment support; movably providing the plate on the attachment support having attachment means; providing a centring shaft coupled to the milling machine, which has a head with sloped surfaces; positioning the plate in a horizontal plane (X, Y) by moving the centring shaft such that the centring shaft fits closely on the centring lug; attaching the plate (1) by means of screws of the attachment means, once positioned in the milling machine; and milling the dental connections, a height reference in the vertical component (Z) being known.

In order to facilitate understanding, the invention is described taking a system of spatial Cartesian coordinates (X, Y, Z) necessary for machining as a reference.

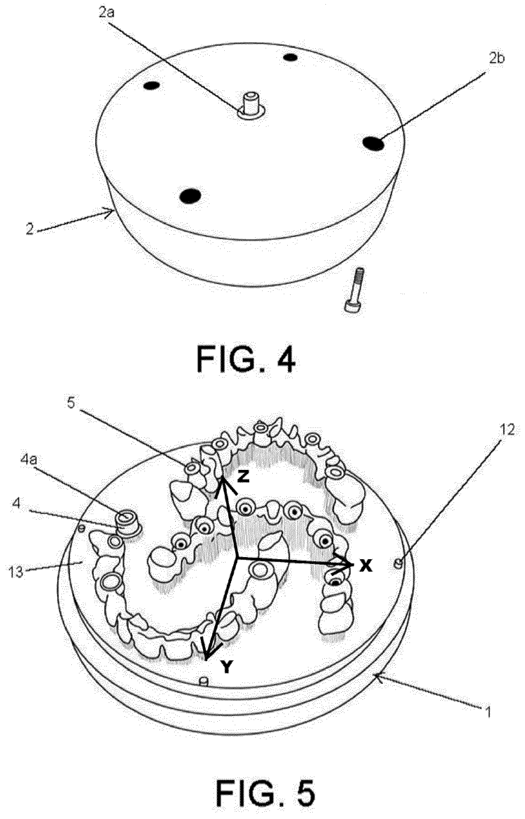

This coordinate system (X, Y, Z) is formed or defined by a first horizontal component (X) and a second horizontal component (Y) that together make up a horizontal plane (X, Y), which can be seen in Figure 5, and a vertical height component (Z). These three axes (X, Y, Z) are considered orthogonal to each other.

This method makes it possible to produce dental connections by combining sintering and milling, using a versatile plate that works in both the sintering machine and the milling machine. Thus, the use of centring systems additional to the milling machine for the positioning of the plate is avoided. In this way, the spatial references of the horizontal components (X) and (Y) in the horizontal plane, which will be necessary in software used for milling, will be known. As such, said software is simplified with regard to other embodiments, reducing costs and production time.

In the reference example, as mentioned above, a single plate that is produced according to the dimensions required by both the sintering machine and the milling machine is used, obtaining a versatile plate that works in both machines. Thus, in the process of transferring the plate used in the sintering for the subsequent machining thereof in the milling machine, with the centring of the plate, the position and geometry of the dental connections are determined. This feature would not be possible if, in the transfer of the dental connections, a different type of support adaptable to the milling machine is used to attach the dental connections, this solution being used in other embodiments.

For faster and more effective positioning, the plate is produced with a diameter comprised between 50 and 200 mm, being of a standardised diameter. In this way, the plate can be used in several milling machines, since said plate is fastened on an attachment support that has a base and an attachment ring of standard dimensions. Said elements of the attachment support of the milling machine are those that determine the dimensions of the plate. Therefore, the plate can be reused in a new process or it can be used for other milling machines of the same standard diameter.

Optionally, the centring shaft is coupled to the milling machine by means of a coupling arm, it being necessary to change the coupling arm for milling. However, in an alternative embodiment the centring shaft is coupled to the milling machine by means of a spindle. The milling tool can subsequently be coupled to this same spindle, thereby simplifying the method, reducing costs and production times.

Optionally, prior to sintering the dental connections, a sintered layer is generated on the plate. In this way, a sintered layer is created which facilitates the subsequent adherence of the sintered dental connections, thus avoiding adherence errors that cause a lack of precision in the sintered dental connections, which would cause the generated pieces to be discarded with the consequent increase in manufacturing costs. Moreover, this sintered layer can be used in new production methods.

Together with the rest of the elements generated in the sintering, at least one orientation lug is optionally generated, preferably four lugs distributed angularly on the periphery of the plate. These orientation lugs will contribute to the orientation and visual verification of the pieces in the sintering.

To facilitate the centring of the plate on the base of the attachment support of the milling machine, the centring shaft coincides in its descent with at least one centring lug of horizontal components (X) and (Y) already known from the previous sintering. In other embodiments of the present invention in which there are several centring lugs, the one that is best suited to coincide with the centring shaft in its descent will be taken as a reference. Thus, a correct adjustment between the centring lug and the centring shaft is achieved, causing the plate to move on the support of the milling machine until it is centred.

Just as it is necessary to know the horizontal components (X) and (Y) of the plate in the milling machine, it is also necessary to know the vertical height component (Z) of the geometry of the dental connections, to send them to the milling software and so that precision errors do not occur in the machining. For this purpose, sometimes the height reference of the vertical component (Z) of the plate will be already known, but on other occasions it will be necessary to determine it.

To do so, it will be necessary to determine the height reference of the vertical component (Z) with centring systems that can be selected from touch probes, laser measurement devices and artificial vision cameras for position triangulation, for the positioning of the plate. Thus, taking into account the already known horizontal components (X) and (Y) of the geometries of the dental connections, determining the vertical component (Z) will not increases the costs of the method as much as in other existing methods.

To determine the vertical component (Z) of the plate in which the dental pieces are already generated, in an exemplary embodiment, at least one point that can be selected from a point on the plate, a point on the dental connections, a point on the centring lug, a point on the sintered layer and a point on the centring lug is taken as a reference.

Given this configuration, the centring of the plate in the milling machine is simple and precise without the need for additional centring systems such as touch probes, laser measurement devices or artificial vision cameras and markers for position triangulation.

In this way, according to the object of the invention, the necessary software in the milling machine for machining is greatly simplified, reducing costs and time in the production of dental connections.

Finally, so that the positioning is as precise as possible, the centring lug is preferably cylindrical and with an inner cavity that is also cylindrical, and correspondingly, the centring shaft is cylindrical and has a head that is preferably conical. Thus, a totally precise positioning of the plate with the dental connections in the milling machine is achieved, thus obtaining dental connections with a high degree of precision and tolerance.

### Description of the figures

Figure 1 shows a schematic perspective view of a portion of a sintering machine, used in a method object of the present invention.
Figure 2 shows a schematic view of the front portion of a plate for sintering.
Figure 3 shows a schematic perspective view of the lower portion of the plate.
Figure 4 shows a schematic perspective view of a sintering disc of the sintering machine.
Figure 5 shows a schematic perspective view of the plate after sintering.
Figure 6 shows a schematic perspective view of a support of a milling machine.
Figure 7 shows a schematic perspective view of the support of the milling machine with the plate already attached to it.
Figure 8 shows a schematic perspective view of a portion of the milling machine with a centring shaft.

### Detailed description of the invention

The present invention relates to a hybrid method for producing dental connections by means of sintering and milling, comprising the steps that will be described below.

In order to facilitate understanding, the invention is described taking a system of spatial Cartesian coordinates (X, Y, Z) necessary for machining as a reference.

This coordinate system (X, Y, Z) is formed or defined by a first horizontal component (X) and a second horizontal component (Y) that together make up a horizontal plane (X, Y), which can be seen in Figure 5, and a vertical height component (Z). These three axes (X, Y, Z) are considered orthogonal to each other.

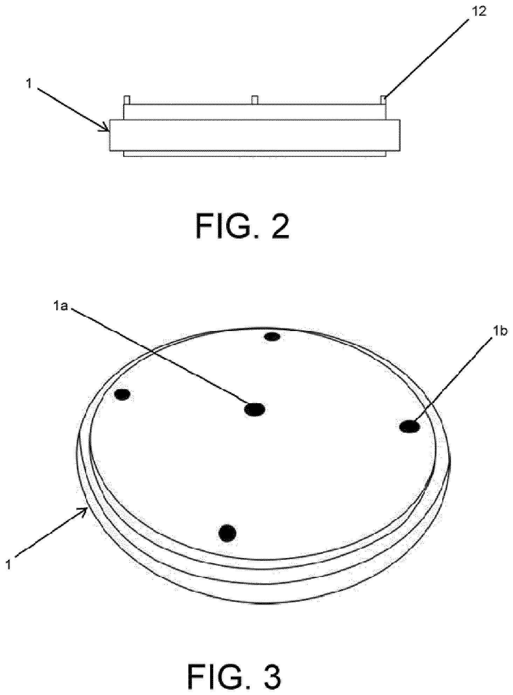

Firstly, a plate (1) of known dimensions is provided, such as the one shown in Figures 2 and 3. Said plate (1) can be previously produced according to the working dimensions of a sintering machine (3) and a milling machine. In a preferred exemplary embodiment, the plate (1) is produced with a diameter between 50 and 200 mm. More specifically, the plate (1) has a diameter of about 98.50 mm, this being the necessary measurement for the plate (1) to fit without play (H6-H7) in an attachment support (6) of the milling machine. The maximum working diameter of the sintering machine (3) will be about 200 mm and, therefore, greater than that of the milling machine.

Once the plate (1) is provided, it is attached to a sintering disc (2) already assembled on the sintering machine (3) by means of fastening means. For the exemplary embodiment shown, the attachment means have a centring hole (1a) and at least two positioning holes (1b) distributed angularly on the lower surface of the plate (1) and in correspondence with centring (2a) and positioning (2b) holes of the sintering disc (2), which are attached with threaded screws such as those shown in Figure 4. As shown in Figure 3, the plate (1) preferably has four positioning holes (1b), in accordance with those made in the sintering disc (2) shown in Figure 4. In this way, the plate (1) is completely centred and attached to the sintering machine (3), being ready for the sintering process.

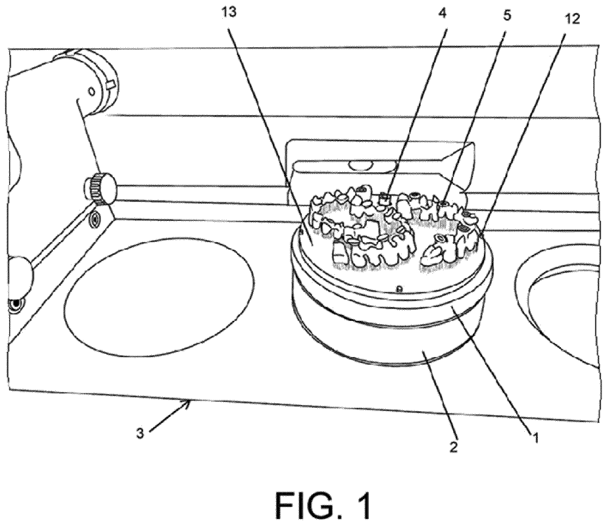

As shown in Figure 1, in the sintering machine (3) there are three circular surfaces, one located on the left where a metallic or ceramic powder is deposited for sintering, a second one where sintering is carried out and a third one where the excess powder is deposited.

Firstly, the powder moves from the first circular surface to the intermediate surface where the plate (1) is located, creating a layer of powder on the same. Next, a laser hardens the material, creating a first sintered layer, and the excess powder will move to the third circular surface. The layers will be formed consecutively one by one until dental connections (5) are completely generated.

Before starting to generate the dental connections (5), columns are generated which will act as a support for the dental connections (5). At this time, at least one centring lug (4), which may be several on specific occasions, is also generated and at least one orientation lug (12) is optionally generated, which will be used for visual positioning in the sintering machine (3). Said centring lug (4) is generated in a random area of the plate (1), based on the available space, the position thereof being attached according to known horizontal references of components (X) and (Y).

Optionally, on said plate prior to the sintering of the dental connections (5), a sintered layer (13) is generated on the plate (1) with the aim that the dental connections (5) be attached with greater adherence, avoiding poor attachment of the same to the plate (1). Moreover, this sintered layer (13) may be reused for new processes together with the plate (1).

Although the tolerance and precision achieved in sintering are acceptable, there are certain dental pieces that require greater precision in the dimensional tolerances thereof. To this end, it is necessary to mill certain parts that require greater precision, such as some of the dental connections (5) that will later be screwed to the base of the implant.

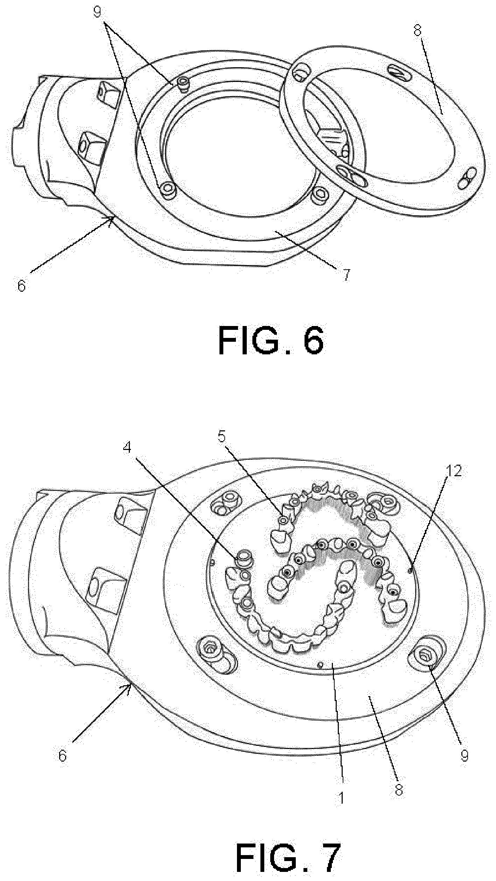

Therefore, the next step is to transfer the plate (1) from the sintering machine (3) to the milling machine, transferring the plate (1) with all the sintered elements as shown in Figure 5. At this time, the plate (1) is provided on an attachment support (6) of the milling machine. As shown in Figure 6, said attachment support (6) has attachment means (7,8,9) which are preferably a base (7), an attachment ring (8) and attachment screws (9). This is established as the usual configuration of the attachment support (6) for milling machines of this type, which can also be of another type. As mentioned above, this standardised configuration will be the one that sets the diameter for the production of the aforementioned plate (1).

In this step, the plate (1) is movably provided on the base (7), placing it between said base (7) and the attachment ring (8), said plate (1) remaining free to move. In this way, the plate (1) is not exactly positioned, which is one of the main problems arising in other embodiments that subsequently require additional measurement systems. Therefore, more precise centring is required and for this, the attachment screws (9) are placed without being completely adjusted, allowing the movement of the plate (1).

Subsequently, a centring shaft (10) of the milling machine descends towards the centring lug (4) of known horizontal components (X) and (Y), X= -35 mm and Y=0 mm in the case of the example. In an alternative embodiment, there are several centring lugs (4), among which the milling machine selects a reference lug for the descent of the centring shaft (10) selected as best suited.

As said centring shaft (10) moves (in this case downwards), it contacts the centring lug (4), producing an adjustment between the two that translates into a movement in the horizontal components (X) and (Y) of the plate (1), positioning said plate in the horizontal plane (X,Y). This adjustment is possible thanks to the sloped surface of a head (11) of the centring shaft (10), which adjusts with the centring lug (4), moving it until completely centring the plate (1).

For greater adjustment precision in the positioning, in a preferred embodiment the head (11) has a conical shape, the centring shaft (10) being cylindrical, and correspondingly the centring lug (4) has an inner cavity (4a) that will also be cylindrical. Nevertheless, the geometric configuration of both the centring shaft (10) and of the centring lug (4) and the inner cavity (4a) can be any other configuration, provided that in the adjustment between the surfaces of the centring shaft (10) and the centring lug (4), the plate (1) moves in the horizontal plane (X, Y) to its exact positioning.

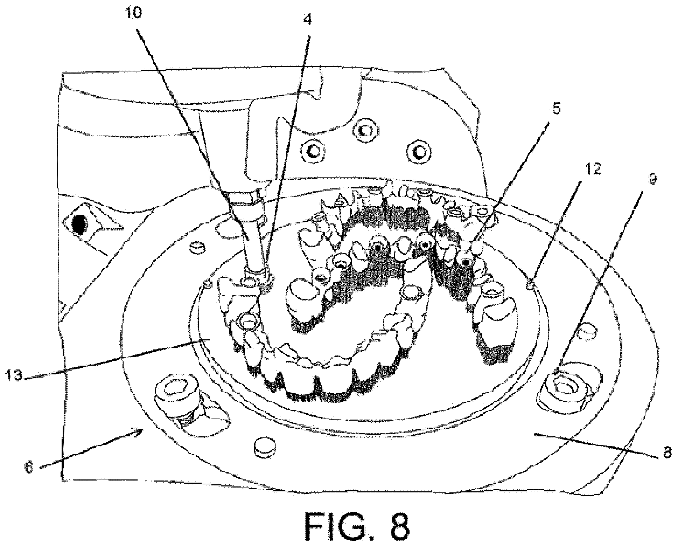

Figure 8 shows the moment when the plate (1) has been completely positioned in its position, with the centring shaft (10) adjusted in the centring lug (4). At this time, the attachment screws (9) are tightened, achieving a completely precise attachment. Since the same spatial centring is achieved in the horizontal components (X,Y) of the plate (1) both for the sintering machine (3) and for the milling machine, and the horizontal components (X) and (Y) being known, the references of the geometries of the dental connections (5) will be known.

In this way, precise milling is ensured without the need for centring systems that increase production costs, such as touch probes, laser measurement devices, and artificial vision cameras and markers for position triangulation. Consequently, much less complex software is used for milling compared to other embodiments, lowering costs and reducing production time.

Once the references in horizontal components (X) and (Y) have been determined, and the height reference in the vertical component (Z) being known, milling is carried out. For said milling, it is only necessary to change the centring shaft (10) for a milling tool.

However, sometimes the height reference of the vertical component (Z) will not be defined due to small variations that may occur in the generation of the dental connections (5) during sintering. To do this, measurement systems such as touch probes, laser measurement devices or artificial vision cameras or markers for position triangulation are used.

To determine the vertical component (Z) of the plate (1) in which the dental pieces (5) are already generated, at least one point that can be selected from a point on the plate (1), a point on the dental connections (5), a point on the sintered layer (13), a point on the centring lug (2) and a point on the orientation lug (12) is taken as a reference.

In a practical example, a laser pointer is placed on an arm of the milling machine. With this laser, one of the aforementioned reference points is measured and the height reference of the vertical component (Z) necessary in the software of the milling machine for the final milling is determined.

Alternatively, the centring shaft (10) can be used to determine the reference in the vertical component (Z) taking into account one of the aforementioned reference points.

With the reference of the vertical component (Z) already determined, the software already has all the spatial references to start milling. At this time, the tool change is carried out with the replacement of the coupling arm of the milling machine. For this purpose, the coupling arm comprising the centring shaft (10) is replaced by another coupling arm comprising the milling tool.

Optionally, the tool change can only be carried out by means of a spindle of the coupling arm adapted to couple both the centring shaft (10) and the milling tool. Thus, costs and time will be reduced with respect to the previous configuration.

The milling of the dental connections (5) that require it is then carried out, thus achieving dental connections (5) with a high degree of precision and tolerance.

Finally, the columns of the dental connections are cut or separated from the plate (1) completing the method. In this last step, the orientation lugs (12) and the centring lug (4) are also removed and said plate (1) will be slightly polished to remove any possible residue and to be used in a new method.

## Claims

1. A hybrid method for producing dental connections by means of sintering and milling, comprising the following steps:
- providing a plate (1) of known dimensions;
- using a sintering machine (3) having a sintering disc (2);
- attaching the plate (1) to the sintering disc (2) of the sintering machine (3) by means of fastening means;
- sintering support columns, dental connections (5) and at least one centring lug (4);
- providing a milling machine having an attachment support (6);
- movably providing the plate (1) on the attachment support (6) having attachment means (7,8,9);
- providing a centring shaft (10) coupled to the milling machine, which has a head (11) with sloped surfaces;
- positioning the plate (1) in a horizontal plane (X, Y) by moving the centring shaft (10) such that the centring shaft (10) fits closely on the centring lug (4);
- attaching the plate (1) by means of screws (9) of the attachment means (7,8,9), once positioned in the milling machine;
- milling the dental connections (5), a height reference in the vertical component (Z) being known.

2. The method according to the preceding claim, wherein the plate (1) is produced according to the working dimensions of the sintering machine (3) and the working dimensions of the milling machine.

3. The method according to claim 1 or 2, wherein the attachment support (6) comprises a base (7), an attachment ring (8) and attachment screws (9), the plate (1) being trapped between the base (7) and the attachment ring (8) to be attached in the milling machine.

4. The method according to any one of claims 1 to 3, wherein the centring shaft (10) is coupled to the milling machine by means of a coupling arm.

5. The method according to any one of claims 1 to 3, wherein the centring shaft (10) is coupled to the milling machine by means of a spindle adapted for coupling both the centring shaft (10) and a milling tool.

6. The method according to any one of claims 1 to 5, wherein a sintered layer (13) is generated on the plate (1) during sintering.

7. The method according to any one of claims 1 to 6, wherein at least one orientation lug (12) is generated on the plate (1) during sintering.

8. The method according to any one of claims 1 to 7, wherein the height reference of the vertical component (Z) for milling the dental connections (5) is determined by at least one centring system that can be selected from touch probes, laser measurement devices and artificial vision cameras for position triangulation.

9. The method according to any one of claims 1 to 8, wherein the height reference of the vertical component (Z) is determined by selecting a reference point in the sintering carried out.

10. The method according to the preceding claim, wherein the reference point can be selected from a point on the plate (1), a point on the dental connections (5), a point on the centring lug (4), a point on the sintered layer (13) and a point on the orientation lug (12).

11. The method according to any one of claims 1 to 10, wherein the centring lug (4) comprises an inner cavity (4a) with a cylindrical shape.

12. The method according to the preceding claim, wherein the centring shaft (10) is cylindrical.

13. The method according to claims 11 and 12, wherein the centring shaft has a head (11) that is conical.
